# EUROPÄISCHE PATENTSCHRIFT

(11) **EP 4 251 395 B1**
(45) Veröffentlichungstag und Bekanntmachung des Hinweises auf die Patenterteilung: **26.02.2025**
(21) Anmeldenummer: 21840440.8
(22) Anmeldetag: 26.11.2021
(51) Int. Cl.: B29C 45/14, H02K 15/12

(54) **VERFAHREN UND VORRICHTUNG ZUR ISOLATIONSBESCHICHTUNG EINES STATORS**
METHOD AND DEVICE FOR INSULATION COATING OF A STATOR
PROCÉDÉ ET DISPOSITIF DE REVÊTEMENT ISOLANT D'UN STATOR

(30) Priorität: 30.11.2020 DE 102020131686; 21.10.2021 DE 102021119986
(43) Veröffentlichungstag der Anmeldung: 04.10.2023
(73) Patentinhaber: Pragma GmbH Zittau, 02763 Zittau (DE)
(72) Erfinder: NEITZEL, Lars, 02625 Bautzen (DE); NETSCH, Lars-Peter, 02791 Oderwitz (DE); BISCHOF, Robert, 22880 Wedel (DE)
(74) Vertreter: Werner, André
(86) Internationale Anmeldenummer: PCT/DE2021/100938
(87) Internationale Veröffentlichungsnummer: WO 2022/111764

(56) Entgegenhaltungen:
- DE-A1- 102014 213 440
- DE-A1- 102019 112 551

## Beschreibung

Die Erfindung betrifft ein Verfahren zur Herstellung von Nutisolierungen, insbesondere von Nuten eines Elektromotor-Stators, sowie eine Vorrichtung hierfür.

Der Stator eines Elektromotors ist in der Regel als Hohlzylinder geformt, an dessen Innenwand radial nach innen gerichtete Blechpakete angeordnet sind. Diese Blechpakete, bei welchen der Abstand zwischen benachbarten Blechpaketen nur wenige Millimeter betragen kann, müssen auf ihrer gesamten Oberfläche mit einer Isolationsschicht überzogen werden, um Kurzschlüsse mit den Induktionsspulen zu vermeiden. Aufgrund der Geometrie und der geringen Abmessungen stellt ein Verfahren zur Isolationsbeschichtung eine technologische Herausforderung dar.

Ein Verfahren zur Isolierung von Statorblechen von Statoren für Elektromotoren, mittels dessen innerhalb eines Stators radial nach innen gerichtete Blechpakete in einem Prozessschritt mit einer dünnen Isolationsschicht überzogen werden können, ist beispielsweise in EP 1 541 315 B1 beschrieben. Bei diesem Verfahren wird eine Isolationsschicht auf die Blechpakete aufgebracht, indem plastisches, urformbares Material in den Stator eingebracht und durch Relativbewegung des Stators zu einem formgebenden Werkzeug überschüssiges Material mit dem formgebenden Werkzeug aus dem Stator herausgeschoben wird, wodurch eine dünnwandige Isolationsschicht auf dem Stator verbleibt.

Zur Durchführung dieses Verfahrens ist jedoch eine große Menge an urformbarem Material erforderlich, da zuerst der Innenraum des Stators mit demselben befüllt werden muss, um anschließend einen Großteil des Isolationsmaterials mit dem formgebenden Werkzeug wieder zu entfernen.

Ferner offenbart DE 10 2014 213 440 A1 ein Verfahren zum Herstellen von Nutisolierungen für eine oder mehrere Nuten zum Einlegen je einer Wicklung einer elektromagnetischen Komponente, wobei die Nutisolierung aus urformbarem Isoliermaterial hergestellt wird, indem die Nut zumindest teilweise mit dem Isoliermaterial gefüllt wird, woraufhin das Isoliermaterial durch Einführen eines oder mehrerer Verdrängungswerkzeuge in die Nut teilweise aus der Nut verdrängt wird.

In DE 10 2019 112 551 A1 ist ein Stator eines elektrischen Motors sowie dessen Herstellung offenbart, wobei der Stator einen Statorkern umfasst, der auf der Innenseite über dem Umfang gleichmäßig verteilt angeordnete, radial nach innen gerichtete Stege aufweist, zwischen denen Statornuten ausgebildet sind. Um die Stege sind jeweils Leitungsdrähte zu Spulen gewickelt, wobei jeder Zwischenraum mit einer Vergussmasse als Isolationsmaterial gefüllt ist.

Aufgabe der Erfindung ist es, ein Verfahren sowie eine Vorrichtung für die Isolationsbeschichtung eines Stators zu entwickeln, wobei im Vergleich zu bestehenden Technologien eine kostengünstigere und automatisierte Beschichtung mit einer ganzflächigen, weitestgehend homogenen elektrischen Isolationsschicht bei deutlich reduziertem Verlust an Isolationsmaterial ermöglicht ist.

Die Lösung dieser Aufgabe erfolgt durch ein Verfahren zur Isolationsbeschichtung mit den kennzeichnenden Merkmalen nach Patentanspruch 1 sowie eine Vorrichtung mit den kennzeichnenden Merkmalen nach Patentanspruch 4; zweckmäßige Ausgestaltungen der Erfindung finden sich in den Unteransprüchen.

Gemäß der Erfindung wird ein Stator, insbesondere dessen Nuten, mittels Dünnwandspritzguss mit einer elektrisch isolierenden Schicht überzogen. Hierzu wird der Stator relativ zu einer stern- bzw. zahnradförmige Düseneinheit, die der Innenquerschnittsgeometrie des Stators formangepasst ist, bewegt, wobei durch radial nach außen gerichtete Auslassöffnungen (auch Anspritzpunkte genannt) der Düseneinheit im Spritzgussverfahren ein fließfähiges, urformbares Isoliermaterial auf die Stege und in die zwischen den Stegen ausgebildeten Nuten unter Ausbildung einer dünnwandigen Isolationsbeschichtung aufgebracht wird.

Es wurde festgestellt, dass mittels des beschriebenen Verfahrens behandelte Statoren eine vollständige Isolationsschicht aufweisen, die insbesondere auch Fertigungsungenauigkeiten in der Statorfertigung bzw. leicht verzogene Statorbleche ausgleichen kann; wobei insbesondere Statoren mit einer Länge von mehr als 130 mm mit einer dünnen, d. h. z. B. zwischen 0,2 und 0,5 mm starken, elektrischen Isolationsschicht ummantelt werden können.

Zusätzlich kann auf den beiden Stirnflächen des Stators jeweils eine Deckscheibe, im Folgenden als Deckschicht bezeichnet, aufgebracht werden, indem die Düseneinheit zu oder vor Beginn der Relativbewegung bezüglich des Stators im ersten Endbereich des Stators Isolationsmaterial unter hohem Druck auf die erste Stirnfläche aufbringt, und ebenso am Ende der Relativbewegung durch den Stator im zweiten Endbereich des Stators Isolationsmaterial unter hohem Druck auf die zweite Stirnfläche aufbringt. Hierbei können Deckschichten mit einer Stärke von vorzugsweise bis zu 3 mm aufgebacht werden.

Es kann vorgesehen sein, in einem ersten Beschichtungsschritt den ersten Endbereich des Stators mit einem "Deckel" zu versehen, indem das Isoliermaterial mit hohem Einspritzdruck von mindestens 1000 bar durch die Auslassöffnungen der Düse gepresst wird. Gleichfalls kann zu Ende der Beschichtung eine Deckelschicht auf die zweite Stirnfläche des Stators mit demselben hohen Druck aufgespritzt werden.

Das Verarbeiten des Isolationsmaterials erfolgt bei erhöhten Temperaturen, bei denen das Material fließfähig ist. Als Isolationsmaterial kann z. B. eine hochwärmeleitfähige Kunststoffmischung verwendet werden.

Die erfindungsgemäße Vorrichtung umfasst ein zylinderförmiges Spritzgusswerkzeugteil, im Folgenden "Spritzgusswerkzeugmittelteil" genannt, in welches der Stator eingelegt wird. Dieses Spritzgusswerkzeugmittelteil ist an seiner ersten Stirnseite offen, an seiner zweiten Stirnseite kann es mit einer Deckplatte verschließbar sein oder es weist eine Stirnwand auf.

Weiterhin umfasst die Vorrichtung ein Deckelteil und einen zweiteiligen Kern, umfassend ein auswerferseitiges Kernteil, im Folgenden Dichtungsstempel genannt, und ein düsenseitiges Kernteil, im Folgenden stempelförmiges Anspritzteil genannt.

Das Deckelteil ist form- und kraftschlüssig mit der ersten Stirnseite des Spritzgusswerkzeugmittelteils verbindbar, wobei das Deckelteil eine zentrale Ausnehmung aufweist.

Die Länge des Spritzgusswerkzeugmittelteils ist um wenige Millimeter größer als die Länge des zu beschichtenden Stators, sodass an beiden Stirnseiten bei verschlossenem Spritzgusswerkzeugmittelteil jeweils ein Hohlraum zwischen Spritzgusswerkzeugmittelteil und eingelegtem Stator ausgebildet ist.

Das fluidisch mit einer Isoliermaterialzufuhreinheit verbindbare, stempelförmige Anspritzteil weist eine Länge auf, die zumindest der Länge des Spritzgusswerkzeugmittelteils entspricht. Der Außendurchmesser des Anspritzteils entspricht im Wesentlichen dem Innendurchmesser der zentralen Ausnehmung des Deckelteils, sodass das Anspritzteil durch diese Öffnung in das Spritzgusswerkzeugmittelteil bzw. den dort eingelegten Stator eingeschoben werden kann. Bevorzugt weisen das stempelförmige Anspritzteil und die zentrale Ausnehmung des Deckelteils eine stern- bzw. zahnradartige Geometrie auf.

Der Dichtungsstempel ist durch eine zentrale Ausnehmung an der zweiten, dem Deckelteil gegenüberliegenden Stirnseite des Spritzgusswerkzeugmittelteils bzw. der dort angeordneten Deckplatte in das Spritzgusswerkzeugmittelteil bzw. den Stator einschiebbar, wobei die Länge des Dichtungsstempels zumindest der Länge des Spritzgusswerkzeugmittelteils entspricht.

Anspritzteil und Dichtungsstempel sind derart gestaltet, dass nach dem Zusammenführen und kraftschlüssigen Verbinden der beiden an ihren jeweiligen einander zugewandten Stirnflächen eine Düseneinheit ausgebildet ist, die über das Anspritzteil mit der Isoliermaterialzufuhreinheit fluidisch verbunden ist. Diese Düseneinheit weist dieselbe Geometrie wie das Anspritzteil auf.

Es wurde festgestellt, dass mittels der beschriebenen Vorrichtung sowohl die Innenflächen der Statoren mit einer fehlerfreien Isolationsschicht als auch die Endbereiche der Statoren mit einer isolierenden Deckscheibe versehen werden können.

Die Vorrichtung zur Isolationsbeschichtung ist weiter derart ausgebildet, dass die Düseneinheit eine zahnradförmige (bzw. sternförmige) Geometrie mit radial nach außen gerichteten Auslassöffnungen aufweist, durch welche beim Beschichtungsvorgang das Isoliermaterial auf den Stator gespritzt wird. Hierbei ist die Düsen-Außengeometrie der Innengeometrie des zu isolierenden Stators angepasst, d. h., die radial nach außen gerichteten Zacken der Düseneinheit ragen in die Nuten des Stators. Vorzugsweise beinhaltet die Düseneinheit an jeder der Zacken eine Auslassöffnung, sodass die Düsen von den Zacken des Sterns bzw. Zahnrads gebildet sind. Die Dimensionen der Düseneinheit sind wenigstens um die aufzubringende Schichtdicke kleiner als die Querschnitts-Innenabmessungen des Stators gewählt, sodass zwischen jeder Düse der Düseneinheit und der Statoroberfläche ein Spalt von mindestens der Stärke der aufzubringenden elektrisch isolierenden Schicht verbleibt.

Eine Ausgestaltung sieht vor, dass die Düseneinheit bildenden Anspritzteil und Dichtungsstempel zwar dieselbe Geometrie, aber im Querschnitt unterschiedliche Abmessungen aufweisen. Hierbei kann das Anspritzteil, d. h. das düsenseitige Kernteil, einen um wenigstens die doppelte Dicke, z. B. 0,2 mm, der aufzubringenden Schicht größeren Außenquerschnittsdurchmesser als der Dichtungsstempel, d. h. das auswerferseitige Kernteil, aufweisen. Hierdurch ist der zwischen Anspritzteil und Statoroberfläche ausgebildete Spalt um eben jene Schichtdicke (von z. B. 0,2 mm) geringer als der Spalt zwischen Dichtungsstempel und Statoroberfläche.

Weiter kann vorgesehen sein, dass Dichtungsstempel und Anspritzteil an ihren jeweiligen in gegenseitigen Kontakt tretenden Stirnseitenflächen Touchierelemente, z. B. in Form von Erhebungen und Vertiefungen nach dem Feder-Nut-Prinzip, aufweisen, die bei Verbinden von Dichtungsstempel und Anspritzteil formschlüssig in die jeweilige Gegenseite eingreifen. Hierdurch wird eine verbesserte Stabilität der Verbindung hinsichtlich Verdrehung der beiden Teile zueinander erzielt, sodass die aus Dichtungsstempel und Anspritzteil gebildete Düseneinheit auch bei hohem Spritzdruck stabil erhalten bleibt.

Gemäß einer Ausführungsform umfasst die Vorrichtung zur Isolationsbeschichtung ein Auswerferseitenteil, welches mit dem Dichtungsstempel an seiner dem Anspritzteil gegenüberliegenden Stirnseite verbindbar ist. Hiermit ist ein (automatisiertes) Auswerfen des beschichteten Stators nach Abschluss der Isolationsbeschichtung ermöglicht.

Die Erfindung wird nachfolgend anhand eines Ausführungsbeispiels näher erläutert, wobei gleiche oder ähnliche Merkmale mit gleichen Bezugszeichen versehen sind. Dazu zeigen in schematischer, perspektivischer Darstellung die
- Fig. 1:: das Verfahren und die Vorrichtung zur Isolationsbeschichtung anhand fünf ausgewählter Momentaufnahmen während der Beschichtung; und
- Fig. 2:: ein Detail der Düseneinheit.

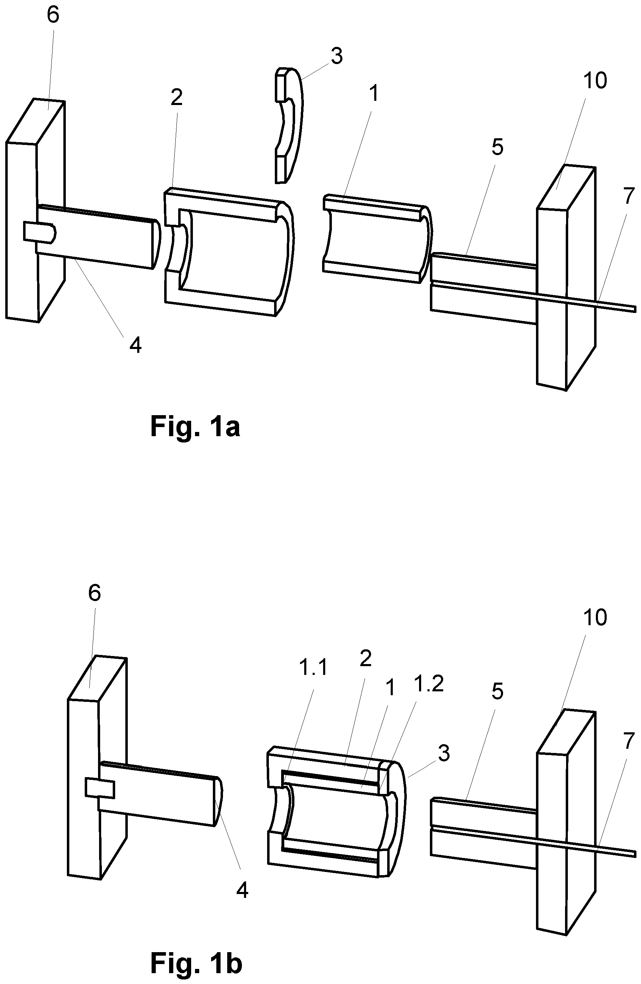

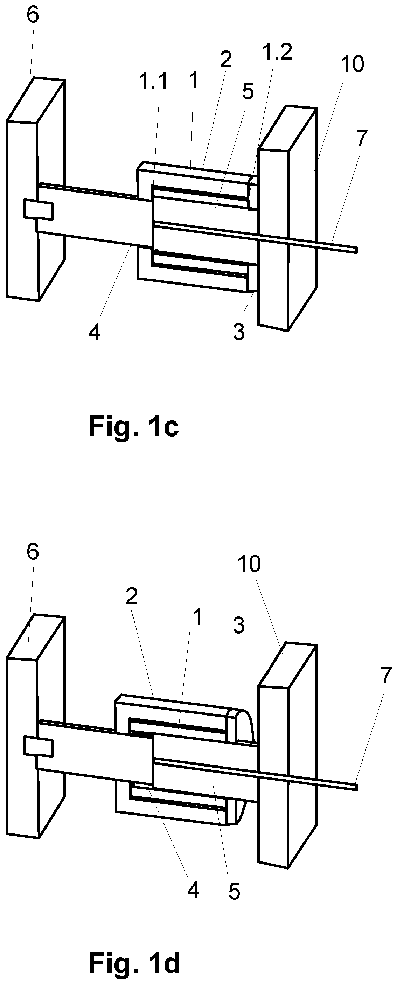

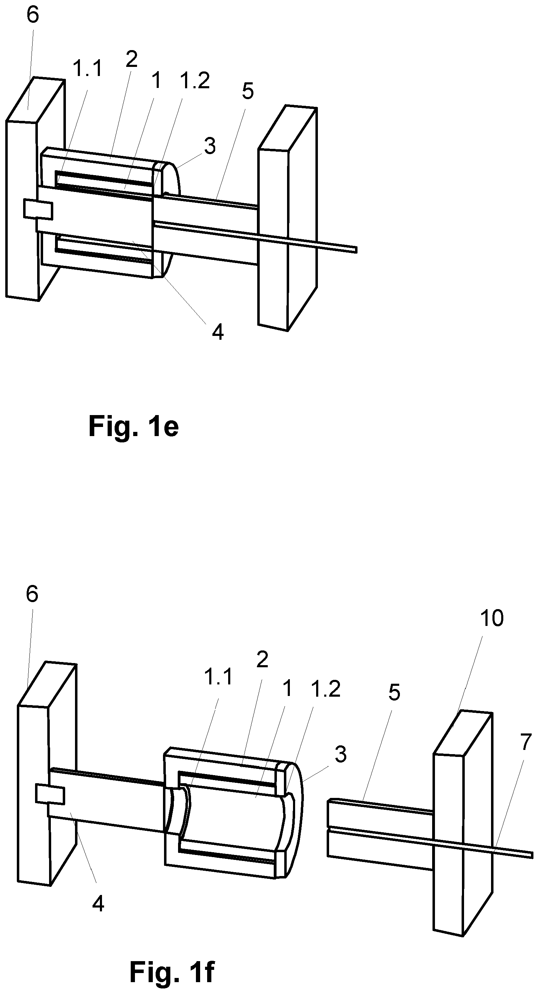

Die wesentlichen Bestandteile der Vorrichtung - nämlich das Spritzgusswerkzeugmittelteil 2, das Deckelteil 3, der Dichtungsstempel 4, das Anspritzteil 5, das Auswerferseitenteil 6 und das Düsenseitenteil 10 mit Fluidleitung 7 - und der zu beschichtende Stator 1 sind in der Explosionsdarstellung in Fig. 1a gezeigt. Die exakte stern- bzw. zahnradförmige Geometrie der Ausnehmung im Deckelteil 3 bzw. dem Dichtungsstempel 4 und Anspritzteil 5 ist aus Gründen der Vereinfachung in der Fig. 1 nicht dargestellt.

Gemäß des in Fig. 1b dargestellten Verfahrensablaufs wird der Stator 1 in das Spritzgusswerkzeugmittelteil 2 eingelegt, welches von einem Hubrahmen (nicht dargestellt) geführt wird. Das Spritzgusswerkzeugmittelteil 2 wird an der offenen Stirnseite mit dem Deckelteil 3 verschlossen. Bei eingelegtem Stator 1 ist an dessen beiden Stirnwänden 1.1 und 1.2 jeweils ein Hohlraum im Spritzgusswerkzeugmittelteil 2 ausgebildet.

Das Spritzgusswerkzeugmittelteil 2 wird anschließend (mittels Klinkenzügen - nicht dargestellt) in die Startstellung gebracht und auf das Anspritzteil 5, das am Düsenseitenteil 10 befestigt ist, geschoben. Das Anspritzteil ist fluidisch mit einer Isoliermaterialzufuhreinheit (dargestellt durch die Fluidleitung 7) verbunden. Beim Schließen des Werkzeuges wird der Dichtungsstempel 4 durch eine stirnseitige, dem Deckelteil 3 gegenüberliegende Öffnung des Spritzgusswerkzeugmittelteils 2 an das Anspritzteil 5 herangefahren, wobei eine Dichtfläche des Anspritzteils 5 mit einer Dichtfläche des Dichtungsstempels 4 kraftschlüssig und spritzdicht verbunden wird, wie in Fig. 1c (Startstellung) zu sehen.

In einem ersten Beschichtungsschritt wird die erste Stirnwand 1.1 des Stators 1 mit einer Deckelschicht versehen, indem das Isoliermaterial mit hohem Druck (von mindestens 1000 bar) durch die Auslassöffnungen der von Dichtungsstempel 4 und Anspritzteil 5 gebildeten Düseneinheit gepresst wird.

Anschließend bewegt sich das Spritzgusswerkzeugmittelteil 2, initiiert durch den Spritzdruck, entlang seiner Längsachse relativ vom Anspritzteil 5 auf den Dichtungsstempel 4, wobei der Stator 1 über die Düseneinheit bewegt wird (Fig. 1d). Bei diesem Beschichtungsschritt werden die Nuten des Stators 1 ganzflächig mit Isoliermaterial überzogen; es entsteht eine zusammenhängende Isolationsschicht.

In einem letzten Beschichtungsschritt wird die zweite Stirnwand 1.2 des Stators 1 mit einer Deckschicht versehen (Fig. 1e). Anschließend wird die kraftschlüssige Verbindung zwischen Anspritzteil 5 und Dichtungsstempel 4 getrennt und das Anspritzteil 5 zurück aus dem Spritzgusswerkzeugmittelteil 2 herausbewegt. Das Spritzgusswerkzeugmittelteil 2 befindet sich auf dem Dichtungsstempel 4 am Auswerferseitenteil 6 in der Endstellung. Dann fährt das Auswerferseitenteil 6 mit dem Dichtungsstempel 4 aus dem Spritzgusswerkzeugmittelteil 2 mit dem isoliertem Stator, das im Hubrahmen (nicht dargestellt) gehalten bzw. geführt wird, heraus. Das Spritzgusswerkzeug ist nun vollständig geöffnet und befindet sich nun wieder in der Ent- und Beladestellung (Fig. 1f), sodass der beschichtete Stator 1 nach Abnehmen des Deckelteils 3 vom Spritzgusswerkzeugmittelteil 2 aus demselben entnommen und ein neuer unbeschichteter Stator 1 eingelegt werden kann.

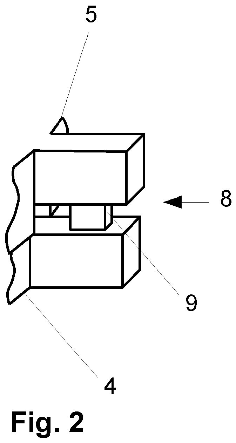

Ein Ausschnitt der von Anspritzteil 5 und Dichtungsstempel 4 gebildeten Düseneinheit ist in Fig. 2 zu sehen. Die stern- bzw. zahnradförmige Düseneinheit umfasst eine Vielzahl von "Zacken" mit radial nach außen gerichteten Auslassöffnungen 8, durch welche das fließfähige, urformbare Isoliermaterial unter hohem Druck auf den Stator (nicht dargestellt) gespritzt wird. Fig. 2 zeigt eine derartige "Zacke". Zur Stabilisierung der Verbindung zwischen Anspritzteil 5 und Dichtungsstempel 4 weisen dieselben Touchierelemente 9 auf, die formschlüssig in gegenüberliegende Vertiefungen (nicht dargestellt) eingreifen.

### Liste der verwendeten Bezugszeichen

- 1: Stator
- 1.1: erste Stirnwand
- 1.2: zweite Stirnwand
- 2: Spritzgusswerkzeugmittelteil
- 3: Deckelteil
- 4: Dichtungsstempel
- 5: Anspritzteil
- 6: Auswerferseitenteil
- 7: Fluidleitung
- 8: Auslassöffnung
- 9: Touchierelement
- 10: Düsenseitenteil

## Patentansprüche

1. Verfahren zur Isolationsbeschichtung eines Stators (1), welcher in Form eines Hohlzylinders mit an seiner Innenwand radial nach innen gerichteten Stegen ausgebildet ist, wobei
- eine relativ zu dem Stator (1) bewegbare Düseneinheit, die der Innenquerschnittsgeometrie des Stators (1) formangepasst ist, im Inneren des Stators (1) entlang seiner Längsachse bewegt wird, wobei durch radial nach außen gerichtete Auslassöffnungen (8) der Düseneinheit im Spritzgussverfahren ein fließfähiges, urformbares Isoliermaterial auf die Stege des Stators (1) und in die zwischen den Stegen ausgebildeten Nuten unter Ausbildung einer dünnwandigen elektrischen Isolationsbeschichtung aufgebracht wird,
- der Stator (1) in ein hohlzylinderförmiges Spritzgusswerkzeugmittelteil (2), das jeweils stirnseitig verschlossen und/oder mittels eines Deckelteils (3) verschließbar ist, eingelegt wird, wobei bei eingelegtem Stator (1) an dessen erster (1.1) und zweiter (1.2) Stirnwand jeweils ein Spaltbereich zu den Stirnwänden des Spritzgusswerkzeugmittelteils (2) ausgebildet ist, der im Verlaufe der Relativbewegung von Düseneinheit und Stator (1) mit fließfähigem, urformbarem Isoliermaterial gefüllt wird,
- zuerst ein erster Spaltbereich zwischen der ersten Stirninnenwand des Spritzgusswerkzeugmittelteils (2) oder einem stirnseitig an dem Spritzgusswerkzeugmittelteil (2) angeordneten Deckelteil (3) und der ersten Stirnwand (1.1) des Stators (1) unter Ausbildung einer ersten stirnseitigen Deckelschicht auf dem Stator (1) mit Isoliermaterial gefüllt wird, anschließend der Stator (1) auf seiner gesamten Innenseite unter Relativbewegung zur Düseneinheit beschichtet wird und schließlich der zweite Spaltbereich zwischen der zweiten Stirnwand des Spritzgusswerkzeugmittelteils (2) und der zweiten Stirnwand (1.2) des Stators (1) unter Ausbildung einer zweiten stirnseitigen Deckelschicht auf dem Stator (1) mit Isoliermaterial gefüllt wird.

2. Verfahren zur Isolationsbeschichtung nach Anspruch 1, **dadurch gekennzeichnet, dass** zumindest zu Beginn und zum Ende des Beschichtungsprozesses das Isoliermaterial mit einem Druck von wenigstens 1000 bar durch die Auslassöffnungen (8) der Düseneinheit gepresst wird

3. Verfahren zur Isolationsbeschichtung nach Anspruch 1 oder 2, **dadurch gekennzeichnet, dass** ein fluidisch mit einer Isoliermaterialzufuhreinheit verbundenes, stempelförmiges Anspritzteil (5) durch eine zentral in eine Stirnwand des Spritzgusswerkzeugmittelteils (2) oder eine in einem stirnseitig an dem Spritzgusswerkzeugmittelteil (2) angeordneten Deckelteil (3) eingebrachte Ausnehmung in den Stator (1) über dessen gesamte Länge eingeschoben wird und anschließend ein Dichtungsstempel (4) mit seiner Stirnwand kraftschlüssig mit dem Anspritzteil (5) unter Ausbildung der Düseneinheit verbunden wird.

4. Vorrichtung zur Isolationsbeschichtung eines Stators (1), aufweisend ein hohlzylinderförmiges Spritzgusswerkzeugmittelteil (2), wobei sie weiterhin aufweist
- ein fluidisch mit einer Isoliermaterialzufuhreinheit verbindbares, stempelförmiges Anspritzteil (5), dessen Länge zumindest der Länge des Spritzgusswerkzeugmittelteils (2) entspricht,
- ein Deckelteil (3), das form- und kraftschlüssig mit einer ersten Stirnseite des Spritzgusswerkzeugmittelteils (2) verbindbar ist, wobei das Deckelteil (3) eine zentrale Ausnehmung aufweist, deren Geometrie im Wesentlichen der Außengeometrie des stempelförmigen Anspritzteils (5) entspricht,
- einen zentral durch eine in eine zweite Stirnwand des Spritzgusswerkzeugmittelteils (2) eingebrachte Ausnehmung in das Spritzgusswerkzeugmittelteil (2) einschiebbaren Dichtungsstempel (4), wobei die Länge des Dichtungsstempels (4) zumindest der Länge des Spritzgusswerkzeugmittelteils (2) entspricht,
- wobei Dichtungsstempel (4) und Anspritzteil (5) an ihren jeweiligen Stirnseiten unter Ausbildung einer Düseneinheit kraftschlüssig verbindbar sind,
- wobei die Düseneinheit eine zahnradförmige Geometrie mit radial nach außen gerichteten Auslassöffnungen (8) aufweist, wobei die Düsen-Außengeometrie der Innengeometrie des Stators (1) formangepasst ist.

5. Vorrichtung zur Isolationsbeschichtung nach Anspruch 4, **dadurch gekennzeichnet, dass** die Querschnitts-Außenabmessungen des Dichtungsstempels (4) wenigstens 0,2 mm kleiner als die Querschnitts-Außenabmessungen des Anspritzteils (5) sind, wodurch zwischen Dichtungsstempel (4) und Statoroberfläche ein größerer Spalt als zwischen Anspritzteil (5) und Statoroberfläche gebildet ist.

6. Vorrichtung zur Isolationsbeschichtung nach Anspruch 4 oder 5, **dadurch gekennzeichnet, dass** Dichtungsstempel (4) und Anspritzteil (5) an ihren jeweiligen in gegenseitigen Kontakt tretenden Stirnseitenflächen formschlüssig in Vertiefungen der jeweiligen Gegenseite eingreifende Touchierelemente (9) aufweisen.

7. Vorrichtung zur Isolationsbeschichtung nach einem der Ansprüche 4 bis 6, **dadurch gekennzeichnet, dass** sie ein Auswerferseitenteil (6) umfasst, welches mit dem Dichtungsstempel (4) an seiner dem Anspritzteil (5) gegenüberliegenden Stirnseite verbindbar ist.

## Claims

1. Method for insulating coating a stator (1) which is designed in the form of a hollow cylinder with radially inwardly directed webs on its inner wall, wherein
- a nozzle unit which is movable relative to the stator (1) and which is adapted to the shape of the internal cross-sectional geometry of the stator (1) is moved inside the stator (1) along its longitudinal axis, wherein a flowable, mouldable insulating material is applied to the webs of the stator (1) and into the grooves formed between the webs by injection moulding through radially outwardly directed outlet openings (8) of the nozzle unit, thereby forming a thin-walled electrical insulation coating,
- the stator (1) is inserted into a hollow cylindrical injection moulding tool middle part (2), which is closed at the end face and/or can be closed by means of a cover part (3), wherein when the stator (1) is inserted, a gap region is formed on its first (1.1) and second (1.2) end walls to the end walls of the injection moulding tool middle part (2), which gap region is filled with flowable, mouldable insulating material during the relative movement of the nozzle unit and the stator (1),
- firstly, a first gap region between the first inner end wall of the injection moulding tool middle part (2) or a cover part (3) arranged on the end face of the injection moulding tool middle part (2) and the first end wall (1.1) of the stator (1) is filled with insulating material to form a first end-face cover layer on the stator (1), then the stator (1) is coated on its entire inside while moving relative to the nozzle unit, and finally the second gap region between the second end wall of the injection moulding tool middle part (2) and the second end wall (1.2) of the stator (1) is filled with insulating material to form a second end-face cover layer on the stator (1).

2. Method for insulating coating according to claim 1, **characterized in that** at least at the beginning and at the end of the coating process, the insulating material is pressed through the outlet openings (8) of the nozzle unit with a pressure of at least 1000 bar.

3. Method for insulating coating according to claim 1 or 2, **characterized in that** a stamp-shaped gating part (5) fluidically connected to an insulating material supply unit is inserted into the stator (1) over its entire length through a recess made centrally in an end wall of the injection moulding tool middle part (2) or in a cover part (3) arranged on the end face of the injection moulding tool middle part (2), and then a sealing stamp (4) is in a force-fitting manner connected with its end face to the gating part (5) to form the nozzle unit.

4. Device for insulating coating a stator (1), comprising a hollow cylindrical injection moulding tool middle part (2), wherein the device further comprises
- a stamp-shaped gating part (5) which can be fluidically connected to an insulating material supply unit and whose length corresponds at least to the length of the injection moulding tool middle part (2),
- a cover part (3) which can be connected in a form-fitting and force-fitting manner to a first end face of the injection moulding tool middle part (2), wherein the cover part (3) has a central recess, the geometry of which essentially corresponds to the outer geometry of the stamp-shaped gating part (5),
- a sealing stamp (4) which can be inserted centrally into the injection moulding tool middle part (2) through a recess made in a second end wall of the injection moulding tool middle part (2), wherein the length of the sealing stamp (4) corresponds at least to the length of the injection moulding tool middle part (2),
- wherein the sealing stamp (4) and the gating part (5) are connectable in a force-fitting manner at their respective end faces to form a nozzle unit,
- wherein the nozzle unit has a gear-shaped geometry with radially outwardly directed outlet openings (8), wherein the nozzle outer geometry is adapted to the inner geometry of the stator (1).

5. Device for insulating coating according to claim 4, **characterized in that** the cross-sectional external dimensions of the sealing stamp (4) are at least 0.2 mm smaller than the cross-sectional external dimensions of the gating part (5), wherein a larger gap is formed between the sealing stamp (4) and the stator surface than between the gating part (5) and the stator surface.

6. Device for insulating coating according to claim 4 or 5, **characterized in that** the sealing stamp (4) and the gating part (5) have touching elements (9) on their respective end faces which come into mutual contact and which engage in a form-fitting manner in recesses on the respective opposite side.

7. Device for insulating coating according to one of the claims 4 to 6, **characterized in that** it comprises an ejector side part (6) which can be connected to the sealing stamp (4) at its end face opposite the gating part (5).

## Revendications

1. Procédé pour le revêtement isolant d'un stator (1), qui est réalisé sous la forme d'un cylindre creux avec des nervures dirigées radialement vers l'intérieur sur sa paroi intérieure,
- une unité de buse mobile par rapport au stator (1), qui est adaptée à la forme de la géométrie de la section transversale intérieure du stator (1), étant déplacée à l'intérieur du stator (1) le long de son axe longitudinal, un matériau isolant fluide, pouvant être mis en forme, étant appliqué par des ouvertures de sortie (8) de l'unité de buse, orientées radialement vers l'extérieur, par un processus de moulage par injection, sur les nervures du stator (1) et dans les rainures formées entre les nervures, en formant un revêtement isolant électrique à paroi mince,
- le stator (1) étant inséré dans une partie centrale d'outil de moulage par injection (2) en forme de cylindre creux, qui est fermée respectivement du côté frontal et/ou peut être fermée au moyen d'une partie capot (3), une zone de fente étant formée, lorsque le stator (1) est inséré, sur sa première (1.1) et sa deuxième (1.2) paroi frontale, respectivement par rapport aux parois frontales de la partie centrale d'outil de moulage par injection (2), laquelle est remplie, au cours du mouvement relatif de l'unité de buse et du stator (1), d'un matériau isolant fluide, pouvant être mis en forme,
- tout d'abord, une première zone de fente entre la première paroi intérieure frontale de la partie centrale d'outil de moulage par injection (2) ou une partie capot (3) disposée frontalement sur la partie centrale d'outil de moulage par injection (2) et la première paroi frontale (1.1) du stator (1) étant remplie de matériau isolant en formant une première couche de capot frontale sur le stator (1), ensuite le stator (1) étant revêtu sur toute sa face intérieure avec un mouvement relatif par rapport à l'unité de buse et enfin la deuxième zone de fente entre la deuxième paroi frontale de la partie centrale d'outil de moulage par injection (2) et la deuxième paroi frontale (1.2) du stator (1) étant remplie de matériau isolant en formant une deuxième couche de capot frontale sur le stator (1).

2. Procédé pour le revêtement isolant selon la revendication 1, **caractérisé en ce qu'**au moins au début et à la fin du processus pour le revêtement, le matériau isolant est pressé à travers les ouvertures de sortie (8) de l'unité de buse avec une pression d'au moins 1000 bars.

3. Procédé pour le revêtement isolant selon la revendication 1 ou 2, **caractérisé en ce qu'**une unité d'alimentation en matériau isolant reliée par un fluide, une pièce d'introduction (5) en forme de filière est introduite dans le stator (1) sur toute sa longueur à travers un évidement pratiqué au centre dans une paroi frontale de la partie centrale de l'outil de moulage par injection (2) ou dans une partie capot (3) disposée sur la face frontale de la partie centrale de l'outil de moulage par injection (2), et ensuite une filière d'étanchéité (4) est reliée par sa paroi frontale à la pièce d'introduction (5) par adhérence en formant l'unité de buse.

4. Dispositif pour le revêtement isolant d'un stator (1), comportant une partie centrale d'outil de moulage par injection (2) en forme de cylindre creux, comportant en outre - une pièce d'introduction (5) en forme de filière pouvant être reliée par fluide à une unité d'alimentation en matériau isolant, dont la longueur correspond au moins à la longueur de la partie centrale d'outil de moulage par injection (2),
- une partie capot (3) pouvant être reliée par complémentarité de forme et par force à une première face frontale de la partie centrale d'outil de moulage par injection (2), la partie capot (3) comportant un évidement central dont la géométrie correspond essentiellement à la géométrie extérieure de la pièce d'introduction en forme de filière (5),
- une filière d'étanchéité (4) pouvant être insérée au centre dans la partie centrale de l'outil de moulage par injection (2) à travers un évidement introduit dans une deuxième paroi frontale de la partie centrale de l'outil de moulage par injection (2), la longueur de la filière d'étanchéité (4) correspondant au moins à la longueur de la partie centrale de l'outil de moulage par injection (2),
- la filière d'étanchéité (4) et la pièce d'introduction (5) pouvant être reliées par adhérence sur leurs faces frontales respectives en formant une unité de buse,
- l'unité de buse comportant une géométrie en forme de roue d'engrenage avec des ouvertures de sortie (8) orientées radialement vers l'extérieur, la géométrie extérieure de la buse étant adaptée à la forme de la géométrie intérieure du stator (1).

5. Dispositif pour le revêtement isolant selon la revendication 4, **caractérisé en ce que** les dimensions extérieures de la section transversale de la filière d'étanchéité (4) sont inférieures d'au moins 0,2 mm aux dimensions extérieures de la section transversale de la pièce d'introduction (5), moyennant quoi
un espace plus grand est formé entre la filière d'étanchéité (4) et la surface du stator qu'entre la pièce d'introduction (5) et la surface du stator.

6. Dispositif pour le revêtement isolant selon la revendication 4 ou 5, **caractérisé en ce que** la filière d'étanchéité (4) et la pièce d'introduction (5) comportent, sur leurs faces frontales respectives entrant en contact mutuel, des éléments de palpage (9) s'engageant par complémentarité de forme dans des creux de la face opposée respective.

7. Dispositif pour le revêtement isolant selon l'une des revendications 4 à 6, **caractérisé en ce qu'**il comprend une partie latérale d'éjection (6) apte à être reliée à la filière d'étanchéité (4) sur sa face frontale opposée à la pièce d'introduction (5).
